# EUROPEAN PATENT APPLICATION

(11) **EP 2 884 626 A1**
(43) Date of publication of application: **17.06.2015**
(21) Application number: 13828479.9
(22) Date of filing: 07.08.2013
(51) Int. Cl.: H02J 17/00, H05B 41/24

(54) **LIGHTING SYSTEM, POWER SUPPLY DEVICE, AND LIGHT FIXTURE**

(30) Priority: 07.08.2012 JP 2012174576
(71) Applicant: Lequio Power Technology Corp., Okinawa 900-0036 (JP)
(72) Inventor: AKIYA Tomomi, Naha-shi Okinawa 900-0036 (JP)
(74) Representative: Carpmaels & Ransford LLP
(86) International application number: PCT/JP2013/071410
(87) International publication number: WO 2014/024934

(57) **Abstract**

A lighting device 1 includes a power supplying unit 10 that supplies power and a lighting unit 20 operable using power supplied by power supplying unit 10. Power supplying unit 10 includes: primary coil 11 electrically connected to an output terminal of an output convertor that rectifies an alternating current supplied by an AC power source; and inverter circuit 12. Inverter circuit 12 feeds to primary coil 11 an alternating current with a determined frequency higher than a frequency of the AC power source based on an output voltage of the convertor. Lighting unit 20 includes a secondary coil 21 and lighting control circuit 22. Upon receipt of power generated by electromagnetic induction invoked by alternating current passing through primary coil 11 in secondary coil 21, lighting control circuit 22 causes an LED or other light source to emit light with power.

## Description

### Technical field

The present invention relates to a lighting device that includes a light-emitting diode or the like as a light source.

### Background

A light emitting diode (LED) is known as a light source that consumes low energy. In this regard, LEDs are increasingly employed for indoor and outdoor lighting devices. Patent Document 1 discloses an LED light bulb. An LED light bulb described in Patent Document 1 includes a base to be plugged into an existing AC power outlet. A substrate on which a light-emitting diode is formed, an electronic circuit to control a light emitting diode, radiator plate, and the like are provided inside the light emitting diode.

[Patent document 1] JP-A-2007-265892

### Summary of Invention

### Problem to be solved by the Invention

Since the LED light bulb described in Patent Document 1 generates a large amount of heat, a radiator is necessary. In relation to this issue, there is known a technology of a contactless transfer of power (referred to also as "a wireless transfer" of power) in which power is transferred without a metal contact or connector. In a contactless power-transferring system based on electromagnetic induction, a primary coil of a power supplying unit is electromagnetically coupled with a secondary coil of a power receiving unit electromagnetically to transfer power from the power receiving unit to the power supplying unit.

However, in the power transferring system based on electromagnetic induction, a problem arises whereby a conducting member included in the lighting device is heated too much due to heat generated by an eddy current, in addition to heat generated by the lighting unit. An increase in generated heat in the power supplying unit necessitates a mechanism to dissipate the generated heat. As a result, a structural configuration of the lighting device becomes complicated. In this regard, an aim of the present invention is to operate a lighting device with power received based on electromagnetic induction without implementing an additional mechanism to address a problem of heat generated in the lighting device.

### Means for solving the problem

To achieve the object described above, a lighting device according to the present invention, comprising: a power supplying unit that supplies power contactlessly; and a lighting unit operable by power supplied by the power supplying unit, wherein the power supplying unit includes: a primary coil having a terminal electrically connected to an output terminal of an output convertor that rectifies an alternating voltage supplied by an AC power source; a switch having a terminal electrically connected to another terminal of the primary coil and another terminal electrically connected to a reference potential; and a drive circuit that feeds to the primary coil an alternating current with a switching frequency based on an output voltage of the convertor by performing an on/off switching on the switch with a switching frequency higher than a frequency of an AC power source, wherein the lighting unit includes: a secondary coil; and a lighting circuit that causes a light source to emit light using a power generated by an electromagnetic induction according to the alternating current passing through the primary coil upon receipt of the power by the secondary coil.

The lighting device may further includes a moving mechanism configured to move the primary coil or the secondary coil to change a positional relationship between the primary coil and the secondary coil.

The lighting device may further includes: a detector unit that detects a physical quantity representative of a change of an intensity of light emitted by the light source; and a feedback controller that performs a feedback control to cause the intensity of the emitted light to become close to a target value by controlling the moving mechanism to change the positional relationship based on the physical quantity detected by the detector unit.

The lighting device may further includes: a detector unit that detects a physical quantity indicative of a change of an intensity of light emitted by the light source; and a feedback controller that performs a feedback control to cause the intensity of the emitted light to become close to a target value by changing the switching frequency based on the physical quantity detected by the detector unit.

In the lighting device, the power supplying unit may include: a feedback coil; and a detector circuit that detects a change of a current passing through the primary coil based on a current fed by the feedback coil due to an electromagnetic induction corresponding to the alternating current, and the drive circuit performs an on/off switching based on the change detected by the detector circuit.

In the lighting device, the primary coil and the secondary coil may be air-core coils.

A power transfer device according to the present invention, that contactlessly supplies power to a luminaire which includes: a secondary coil and a lighting circuit that cause a light source to emit light using power received by the secondary coil, the device comprising: a primary coil having a terminal electrically connected to an output terminal of an output convertor that rectifies an alternating voltage supplied by an AC power source; a switch having a terminal electrically connected to another terminal of the primary coil and another terminal electrically connected to a reference potential; and a drive circuit that feeds an alternating current with a switching frequency based on an output voltage of the convertor in the primary coil by performing an on/off switching of the switch with a switching frequency higher than a frequency of the AC power source.

A luminaire according to the present invention, operable using power received by a power transfer device which includes: a primary coil having a terminal electrically connected to an output terminal of an output convertor that rectifies an alternating voltage supplied by an AC power source; a switch having a terminal electrically connected to another terminal of the primary coil and another terminal electrically connected to a reference potential; and a drive circuit that feeds an alternating current to the primary coil with a switching frequency based on an output voltage of the convertor by performing an on/off switching of the switch with a switching frequency higher than a frequency of an AC power source, the luminaire comprising: a secondary coil; and a lighting circuit that causes a light source to emit light using a power generated by an electromagnetic induction according to the alternating current passing through the primary coil upon receipt of the power by the secondary coil.

### A Brief Explanation of the Drawings

Fig. 1 is a block diagram showing an overall configuration of a lighting device according to a first embodiment of the present invention.
Fig. 2 shows a configuration of a power supplying unit and a lighting unit according to the first embodiment.
Fig. 3 shows a schematic diagram of an electrical connection between an inverter circuit and a lighting circuit according to the first embodiment.
Fig. 4 shows a structural configuration of a circuit board of the lighting device according to the first embodiment.
Fig. 5 shows circuitry of the power supplying unit according to the first embodiment.
Fig. 6 shows circuitry of the power supplying unit according to the first embodiment.
Fig. 7 shows circuitry of the lighting unit according to the first embodiment.
Fig. 8 shows results of a test operation of a drive circuit.
Fig. 9 shows a comparison of the lighting device according to the first embodiment with a conventional lighting device.
Fig. 10 shows a structural configuration of a primary coil set including two planar coils according to Application 1.
Fig. 11 shows a circuitry of a power supplying unit according to Application 1.
Fig. 12 shows a profile of static magnetic field according to Application 1.
Fig. 13 shows a configuration of a primary coil set including three planar coils according to Application 1.
Fig. 14 shows a configuration of a primary coil in which a solenoid coil is employed according to Application 2.
Fig. 15 shows a schematic diagram of an electrical connection between an inverter circuit and a lighting circuit according to Application 2.
Fig. 16 shows a dimmer control in the first example according to a second embodiment of the present invention.
Fig. 17 shows a dimmer control in the first example according to the second embodiment.
Fig. 18 shows a dimmer control in the first example according to the second embodiment.
Fig. 19 shows a dimmer control in the first example according to the second embodiment.
Fig. 20 shows a dimmer control in the second example according to the second embodiment.
Fig. 21 shows a dimmer control in the second example according to the second embodiment.
Fig. 22 shows a dimmer control in the third example according to the second embodiment.
Fig. 23 shows a dimmer control in the fifth example according to the second embodiment.

### Description of reference numerals

1... lighting device, 10...power supplying unit, 100...power supplying circuit board, 101... circuit board, 102 , 105... magnetic sheet, 106 ... radiator plate, 11...primary coil, 111, 112, 113...planar coil, 12...inverter circuit, 121... AC/DC convertor, 122 ... drive circuit, 123 ... capacitor, 124...N-type MOSFET, 13...feedback coil, 138...balanced circuit, 14...moving mechanism, 15... input device, 16... detector unit, 17, 18... feedback controller, 20... lighting unit, 200... lighting circuit board, 21... secondary coil, 22... lighting control circuit 221... light emitting diode, 23... moving mechanism, 24... input device, 25... detector unit, 26... feedback controller

### Best mode for carrying out the Invention

Embodiments of the present invention will be described hereinafter referring to the figures.

### First embodiment

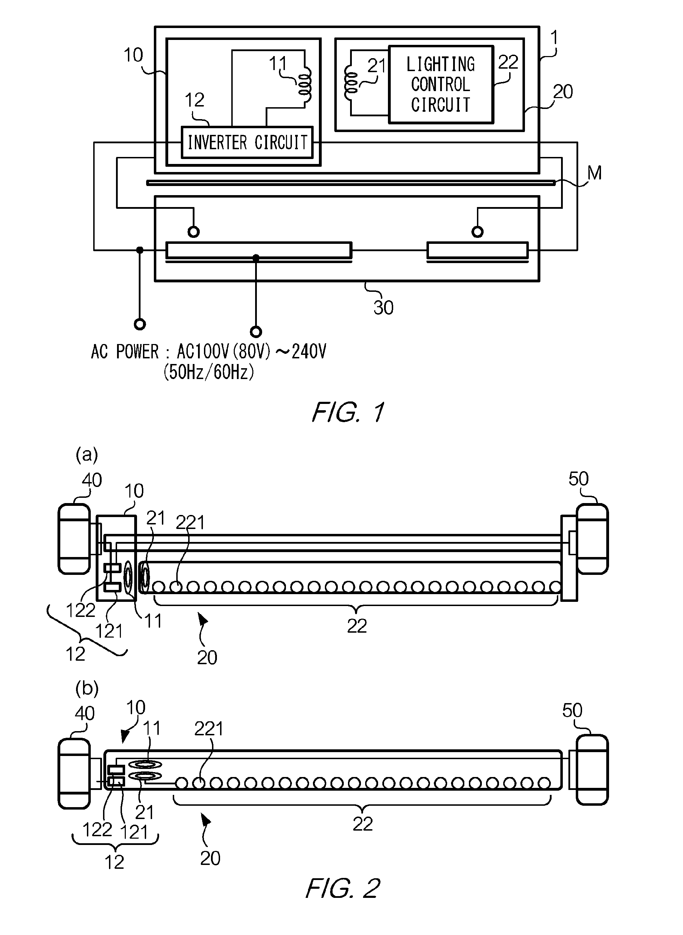

Fig. 1 is a block diagram showing an overall configuration of a lighting device 1 according to a first embodiment of the present invention. Lighting device 1 has a shape of a straight-tube type fluorescent lamp or the like, which may be attached to a ceiling of a room in a building. As shown in Fig. 1, lighting device 1 generally includes a power supplying unit 10, lighting unit 20, and ballast 30. Power supplying unit 10 contactlessly supplies power to lighting unit 20 based on electromagnetic induction invoked by an alternating current supplied by a power source (AC power), which is widely used in homes, office buildings, and the like. In Japan, a frequency of the power source is either 50Hz or 60Hz.
Power supplying unit 10 includes a primary coil 11 for supplying power and an inverter circuit 12 configured to generate power to be supplied to lighting unit 20. Lighting unit 20, which is operable by power supplied by power supplying unit 10, includes a secondary coil 21 for receiving power and lighting control circuit 22 operable with power received by supplying unit 10.

Ballast 30 may be arranged at a side opposite to power supplying unit 10 and lighting unit 20 with regard to a metal member M functioning as a reflector of a fluorescent lamp. Ballast 30 is a rapid start ballast, which is electrically connected to inverter circuit 12 of power supplying unit 10 as shown in Fig. 1. In view of a function and purpose, rapid start ballasts are generally categorized into a dimmerable type (coated with a conductor film), a water/explosion-proof type (stripe type), and a type for a general purpose (silicon type). A rapid start ballast of any type can be employed in the embodiment.

Fig. 2 shows a structural configuration of power supplying unit 10 and a lighting unit 20 included in lighting device 1. Specifically, Fig. 2(a) shows a first example of lighting device 1 and Fig. 2(b) shows a second example of lighting device 1. In lighting device 1 according to the first example shown in Fig. 2(a) power supplying unit 10 is implemented by means of an adaptor. Thus, power supplying unit 10 and lighting unit 20 may be provided as independent hardware components. In this case, lighting device 1 can be regarded as a hardware unit including power supplying unit 10 for supplying power and lighting unit 20 for emitting light. Primary coil 11 included in power supplying unit 10 is an air-core planar coil generated by coplanarly winding (curled) multiple conductive and insulator-coated wires such as Litz wire. Primary coil 11 is arranged to face lighting unit 20.

Inverter circuit 12 of power supplying unit 10 includes an AC/DC convertor 121 and drive circuit 122, which are electrically connected to primary coil 11. AC/DC convertor 121 is electrically connected to first socket 40 in which a base adapted to be plugged into a power outlet is provided. AC/DC convertor 121 is a convertor electrically connected to the AC power outlet via first socket 40. Ballast 30 is configured to convert an alternating current supplied via the AC power outlet to a direct current. Drive circuit 122 is electrically connected to AC/DC convertor 121 and a second socket 50 in which a base for a grounding terminal is provided.

Drive circuit 122 is an output inverter, which is grounded via second socket 50 and ballast 30 and is configured to convert a direct current supplied by AC/DC convertor 121 to an alternating current of a predetermined frequency. First socket 40 and second socket 50 may be sockets fixed to a home, office building or other facilities. Thus, additional electrical work is not necessary to install lighting device 1. Lighting device 1 is connected to a grounding terminal of second socket 50 to define a ground potential as the reference potential of lighting device 1.

Similarly to primary coil 11, secondary coil 21 included in lighting unit 20 is an air-core planar coil, which is made by coplanarly winding wires. Secondary coil 21 is wound in a direction similar to that of primary coil 11. Secondary coil 21 is positioned in a direction to face power supplying unit 10. Stated otherwise, secondary coil 21 and primary coil 11 face each other. By this arrangement, when an alternating current is fed into primary coil 11, primary coil 11 and secondary coil 21 are electromagnetically coupled by electromagnetic induction. Lighting control circuit 22 of lighting unit 20 includes multiple light emitting diodes 221 as light sources. Light emitting diode 221 is electrically connected to secondary coil 21 and is configured to emit light upon receiving power from secondary coil 21. As shown in Fig. 2, light emitting diodes 221 are arranged planarly in a longitudinal direction (i.e., horizontal direction on paper) of lighting device 1. Alternatively, light emitting diodes 221 may be arranged three dimensionally. Lighting control circuit 22 with light emitting diode 221 may be implemented by a single hardware unit. Alternatively, an adaptor including a socket (not shown in the figure) may be provided to lighting unit 20, such that light emitting diode 221 is detachably attached to the adaptor.

Lighting device 1 according to the second example shown in Fig. 2(b) differs from that of the first example in that power supplying unit 10 and lighting unit 20 are implemented as a single hardware unit. Similarly to the first example, it is possible to fix lighting device 1 according to the second example by attaching power supplying unit 10 and lighting unit 20, which are formed as a single unit to first socket 40 and second socket 50. Since an operation and structural configuration of lighting device 1 according to the second example are similar to those of lighting device 1 according to the first example, an explanation thereof is omitted. The descriptions provided below in the embodiment are applied to both the first and second examples of the embodiment. Lighting device 1 includes a circuit for performing a feedback control, which is not shown in Fig. 1 or Fig. 2.

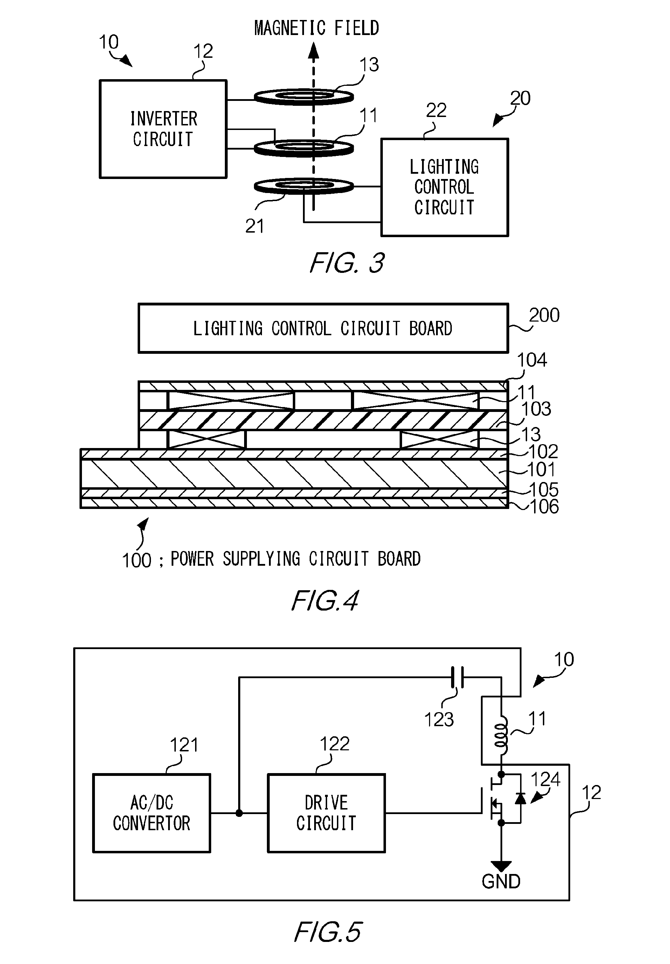

Fig. 3 shows a schematic diagram of electrical connection between inverter circuit 12 and lighting control circuit 22. As described above, inverter circuit 12 is electrically connected to primary coil 11. Inverter circuit 12 is also electrically connected to feedback coil 13. Similarly to primary coil 11 and secondary coil 21, feedback coil 13 is an air-core planar coil, and is configured to be electromagnetically coupled to primary coil 11 when an alternating current passes through primary coil 11. Feedback coil 13 is necessary for a feedback control performed by power supplying unit 10. Detailed description of the feedback control will be provided later. Lighting control circuit 22 is electrically connected to secondary coil 21. Secondary coil 21 is provided at an opposite side of feedback coil 13 with regard to primary coil 11. Primary coil 11 is provided at a distance from secondary coil 21 and feedback coil 13 such that they can be electromagnetically coupled. Preferably, an inductance of secondary coil 21 is greater than that of primary coil 11. Greater self-inductance of secondary coil 21 relative to primary coil 11 can invoke greater induced electromotive force due to a change of current passing through primary coil 11, whereby greater power can be received.

Fig. 4 shows a structural configuration of a power supplying circuit board 100 of power supplying unit 10. Specifically Fig. 4 shows a cross section of power supplying circuit board 100 with regard to a plane vertical to a plane of primary coil 11.

In power supplying circuit board 100, electronic devices included in inverter circuit 12 except for primary coil 11 and feedback coil 13 are formed on a circuit board 101. First magnetic sheet 102, feedback coil 13, first spacer 103 made of a radiator sheet or resin sheet, primary coil 11, and second spacer 104 are arranged on power supplying circuit board 100 respectively in a direction toward a circuit board (hereinafter referred to as "lighting control circuit board 200") included in lighting unit 20. Second magnetic sheet 105 and radiator plate 106 are arranged on power supplying circuit board 100 respectively in a direction away from lighting circuit board 200.

Magnetic sheets 102 and 105 are employed for reducing electromagnetic noise. Magnetic sheets 102 and 105 are of magnetic substances, arranged at a predetermined distance from feedback coil 13 and primary coil 11, covering feedback coil 13 and primary coil 11 from the side opposite to lighting circuit board 200. Radiator plate 106 is provided to radiate heat transferred to circuit board 101. A material having a large thermal conductivity (for example, aluminum or copper) can be employed for radiator plate 106. Preferably, radiator plate 106 is a non-magnetic material to reduce influence of external magnetic field on primary coil 11 and feedback coil 13. When an alternating current is fed into primary coil 11 and/or feedback coil 13, magnetic sheets 102 and 105 act as a magnetic shield. Thus, induction heating of radiator plate 106 is prevented. Lighting circuit board 200 includes a circuit board on which secondary coil 21 and lighting control circuit 22 are formed.

Power supplying circuit board 100 and lighting circuit board 200 provided in lighting device 1 are separate and independent circuit boards.

Fig. 5 shows a circuitry of power supplying unit 10, in which feedback coil 13 and a feedback circuit are omitted.

AC/DC convertor 121 is a convertor configured to rectify an alternating current input from AC power source (which is also referred to as "a commercial power source") and output the rectified current. A terminal of capacitor 123 is electrically connected to an output terminal of AC/DC convertor 121. Capacitor 123 is a resonance capacitor to change a resonance frequency of power supplying unit 10. A terminal of primary coil 11 is electrically connected to the other terminal of capacitor 123 (an output terminal of AC/DC convertor 121). N-type MOSFET 124 is a switch provided such that a terminal of N-type MOSFET 124 is electrically connected to the other terminal of primary coil 11, and the other terminal of N-type MOSFET 124 is electrically connected to the ground as the reference potential. Drive circuit 122 is commonly connected to an output terminal of AC/DC convertor 121 and a terminal of capacitor 123. In addition, drive circuit 122 is also connected to a gate of N-type MOSFET 124. Drive circuit 122 may be a PWM (pulse width modulation) control circuit to perform an on/off switching on N-type MOSFET 124 by a switching frequency that is greater than the AC power source frequency (for example, 50kHz-140kHz), to feed an alternating current with the switching frequency to primary coil 11 based on an output current of AC/DC convertor 121.

Feedback coil 13 is electromagnetically coupled with primary coil 11 of power supplying unit 10. Both terminals of the feedback circuit are electrically connected to feedback coil 13, so as to detect a change of current passing in primary coil 11 based on a current passing in feedback coil 13, and feeds back the change to drive circuit 122. Drive circuit 122 performs an on/off switching on N-type MOSFET 124 based on a result of the detection made by the feedback circuit.

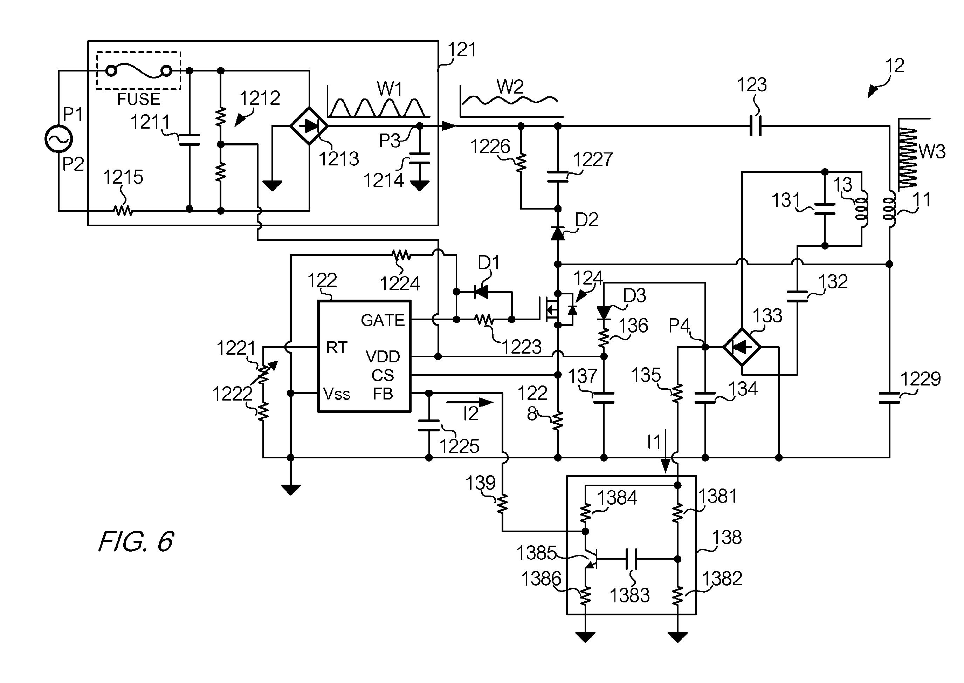

Fig. 6 shows a circuitry of power supplying unit 10 in more detail than in Fig. 5. Firstly, a circuitry of AC/DC convertor 121 is described. A terminal of capacitor 1211 is electrically connected to a terminal P1 corresponding to a polarity of the AC power source. The other terminal of capacitor 1211 is electrically connected to a terminal P2 corresponding to the opposite polarity. Capacitor 1211 is a capacitor configured to reduce electric noise caused by the alternating current supplied by the AC power source. Potential divider 1212 is connected parallely with capacitor 1211 and includes two resistors that are serially connected between terminals P1 and P2. A voltage reduced by potential divider 1212 is applied to a VDD terminal as a source voltage of drive circuit 122. Bridge rectifier circuit 1213 is a rectification circuit that includes four diodes connected with each other by a bridge connection, to perform a full-wave rectification on an alternating current input by the AC power source and to output the rectified current to an output terminal P3 (refer to a waveform W1 shown in Fig. 6). Capacitor 1214 is a ripple filter provided between output terminal P3 of bridge rectifier circuit 1213 and the ground, to exclude a pulsating current included in a voltage output by bridge rectifier circuit 1213 (refer to waveform W2 shown in Fig. 6). Resistor 1215 is an NTC thermistor.

A configuration of drive circuit 122 and related circuit elements will now be described.

Drive circuit 122 is operable with a voltage applied to the VDD terminal as a source voltage. A Vss terminal is a terminal to which a voltage defining a reference potential is input. In this embodiment, drive circuit 122 is connected to the ground. An RT terminal is a terminal defining a frequency applied when drive circuit 122 is activated. Variable resistors 1221 and 1222 are provided serially between the RT terminal and the ground. A GATE terminal is electrically connected to a gate of N-type MOSFET 124 via a parallel circuit including resistor 1223 and diode D1 functioning as a noise reducer. Drive circuit 122 outputs a control signal to perform an on/off switching with a predetermined switching frequency on N-type MOSFET 124 from the GATE terminal. The switching frequency is an inverse number of a length of time of a single on-state (and also off-state) of N-type MOSFET 124. Resistor 1224 is commonly connected to a parallel circuit including resistor 1223 and diode D1 and to the GATE terminal. An FB terminal is a terminal to which a voltage defining a feedback control is applied, and is electrically connected to balanced circuit 138. Description of circuitry and operation of balanced circuit 138 will be described later. Capacitor 1225 provided between the FB terminal and the ground is configured to cause electric noise to transfer to the ground. A CS terminal is electrically connected to a terminal of resistor 1226. Upon detection of an overcurrent in resistor 1226 via the CS terminal, drive circuit 122 is terminated.

Output terminal P3 of AC/DC convertor 121 is electrically connected to a terminal of a parallel circuit including resistor 1226 and capacitor 1227. The other terminal of the parallel circuit is electrically connected to a drain of N-type MOSFET 124 via an inversely connected diode D2. Thus, when N-type MOSFET 124 is turned on, output terminal P3 is electrically connected to the ground via N-type MOSFET 124 and resistor 1228, which functions as an overcurrent detection resistor. Accordingly, an alternating current applied to output terminal P3 includes a direct current component corresponding to a voltage drop due to a resistance of resistor 1228 and an on-resistance of N-type MOSFET 124. Since drive circuit 122 performs an on/off switching on N-type MOSFET 124 by the predetermined switching frequency, when N-type MOSFET 124 is turned off a voltage corresponding to an output voltage of AC/DC convertor 121 is applied to primary coil 11. As a result, an alternating current of the switching frequency of drive circuit 122 is applied to primary coil 11 (refer to waveform W3 in Fig. 6), and therefore an alternating current with the switching frequency is fed to primary coil 11.

The parallel circuit including resistor 1226 and capacitor 1227 is configured to discharge stored energy to primary coil 11 when N-type MOSFET 124 is turned on. Capacitor 1229 provided between the other terminal of primary coil 11 and the ground is configured to cause electric noise to be transferred to the ground.

Description will now be directed to the feedback circuit.

Feedback coil 13 is electromagnetically coupled with primary coil 11 by a magnetic field generated responsive to an alternating current passing through primary coil 11. Capacitor 131 is a resonance capacitor configured to change a resonance frequency, a terminal of which is connected to a terminal of feedback coil 13 and the other terminal of which is connected to the other terminal feedback coil 13. Bridge rectifier circuit 132 is a rectification circuit including four diodes connected by a bridge connection to perform a full-rectification on an alternating current supplied by feedback coil 13 and to output a rectified current. Capacitor 133 is configured to prevent a reverse current fed from bridge rectifier circuit 132. Capacitor 134 is a ripple filter provided between an output terminal P4 of bridge rectifier circuit 132 and the ground, to exclude a pulsating current included in a full-rectified output voltage of bridge rectifier circuit. Resistor 135 is configured to convert a direct voltage applied to output terminal P4 by feedback coil 13 to a direct current, and to output the converted direct current to balanced circuit 138.

Diode D3 and resistor 136, which are serially connected and provided between output terminal P4 of bridge rectifier circuit 132 and the VDD terminal of drive circuit 122, are configured to control a direction of current and prevent overcurrent fed to drive circuit 122 from output terminal P4. Capacitor 137 provided between resistor 136 and the ground is configured to cause electric noise to be transferred to the ground.

A circuitry of balanced circuit 138 will now be described. Balanced circuit 138 is a detector circuit configured to detect a change of current passing through primary coil 11 based on a current fed from feedback coil 13. A terminal of resistor 1381 is connected to resistor 135. One of the terminals of resistor 1382 is connected to the other terminal of resistor 1361, and the other terminal of resistor 1382 is connected to the ground. A terminal of capacitor 1383 is connected to a contact of resistor 1381 and resistor 1382. A terminal of resistor 1384 is commonly connected to resistor 135 and resistor 1381. A collector of NPN bipolar transistor 1385 is connected to the other terminal of resistor 1384 and FB terminal of drive circuit 122 via resistor 139. A base of NPN bipolar transistor 1385 is connected to the other terminal of capacitor 1383. One of the terminals of resistor 1386 is connected to an emitter of NPN bipolar transistor 1385, and the other terminal of resistor 1386 is connected to the ground.

Balanced circuit 138 enables drive circuit 122 to perform a feedback control by feeding back a change of current I1 fed from resistor 135 to drive circuit 122. For example, when an electromagnetic induction occurring at primary coil 11 weakens, current I1 originating in feedback coil 13 and fed from resistor 135 will decrease. In this case, current I2 fed from the FB terminal of drive circuit 122 to balanced circuit 138 will increase by the amount of the decrease of current I1. Conversely, when an electromagnetic induction occurring at primary coil 11 becomes strong, current I1 originating in feedback coil 13 and fed from resistor 135 feedback coil 13 will increase. In this case, current I2 fed from the FB terminal of drive circuit 122 to balanced circuit 138 will decrease by the amount of the increase of current I1.

Thus, it is possible to determine a change of a current passing through primary coil 11 and therefore a status of transferring power to lighting unit 20 by monitoring a change of a current fed into balanced circuit 138 via the FB terminal by drive circuit 122. In this regard, drive circuit 122 performs a feedback control that may include an adjustment of the switching frequency of N-type MOSFET 124 such that a voltage of the FB terminal is close to a predetermined voltage.

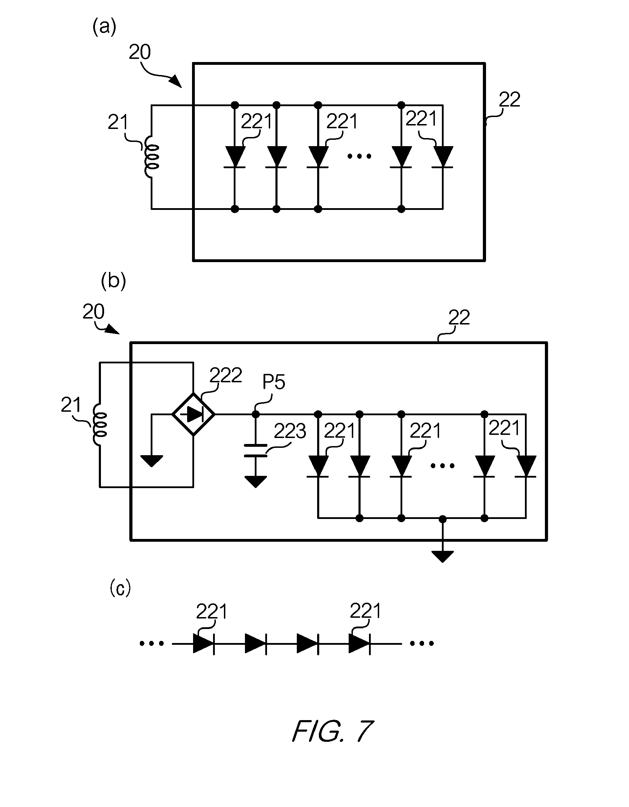

Fig. 7 shows circuitries of lighting unit 20. Fig. 7(a) is shows a circuitry of lighting unit 20 configured to cause light emitting diode 221 to emit light using alternating voltage supplied by secondary coil 21. Fig. 7(b) shows a circuitry of lighting unit 20 configured to cause light emitting diode 221 to emit light after converting the alternating voltage supplied by secondary coil 21 to a direct voltage.

In lighting unit 20 shown in Fig. 7(a), light emitting diodes 221 are parallely connected to secondary coil 21, whereas lighting unit 20 does not include a circuit to convert an alternating voltage to a direct voltage. Light emitting diodes 221 emit light upon receipt of an alternating voltage from secondary coil 21. In lighting unit 20 shown in Fig. 7(b), multiple light emitting diodes 221 are parallely connected to secondary coil 21 via a bridge rectifier circuit 222 and capacitor 223. Bridge rectifier circuit 222 is configured to rectify an alternating current supplied by secondary coil 21. Capacitor 223, functioning as a ripple filter, applies a smoothed voltage after the rectification to light emitting diodes 221. Instead of circuitries shown in Figs. 7(a) and (b) in which all of the light emitting diodes 221 are parallely connected, at least some of the light emitting diodes 221 may be connect serially as shown in Fig. 7(c).

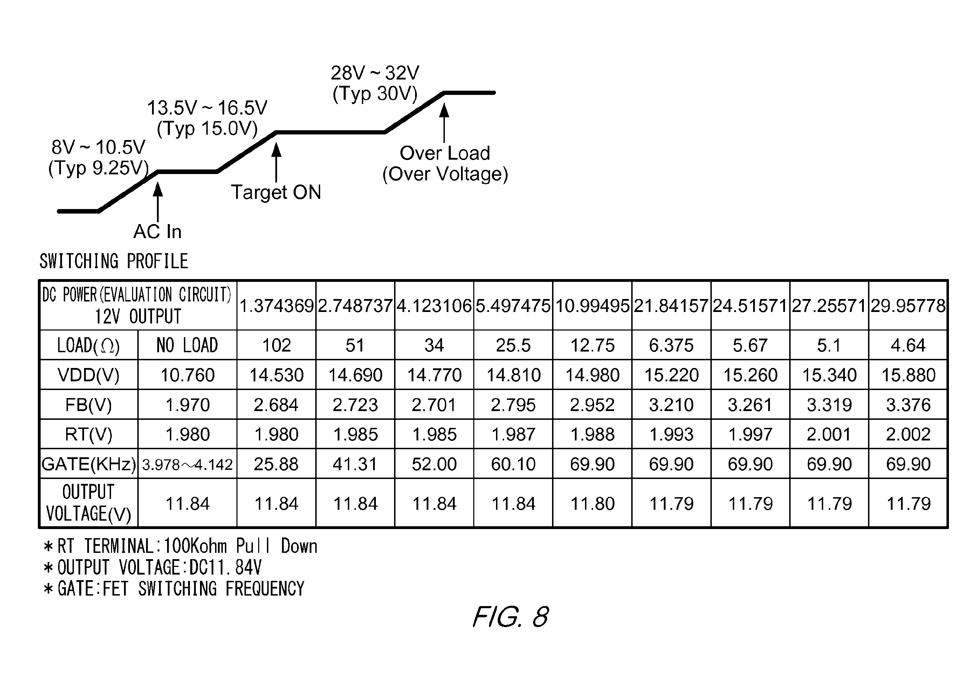

Fig. 8 shows results of test operations of drive circuit 122. In the test, an IC product name OZ9987 provided by 02 Micro International Limited is used for drive circuit 122. In Fig. 8, the upper graph shows a history of the source voltage applied to the VDD terminal. The source voltage is 8V to 10.5 V when the circuit is turned on. The source voltage becomes 13.5 to 16.5V when a load (corresponding to a light emitting diode included in the lighting circuit) is connected to the power receiving unit (i.e., when the target is turned on). The source voltage becomes 28 to 32V when no load is connected to the power receiving unit or the power receiving unit is overloaded (short-circuited). The lower graph of Fig. 8 shows loads, voltages at terminals (VDD, FB, and RT), switching frequencies (GATE(KHz)) of N-type MOSFET 124, and voltages at an output terminal P5 of ripple filter included in lighting unit 20 shown in Fig. 7(b).

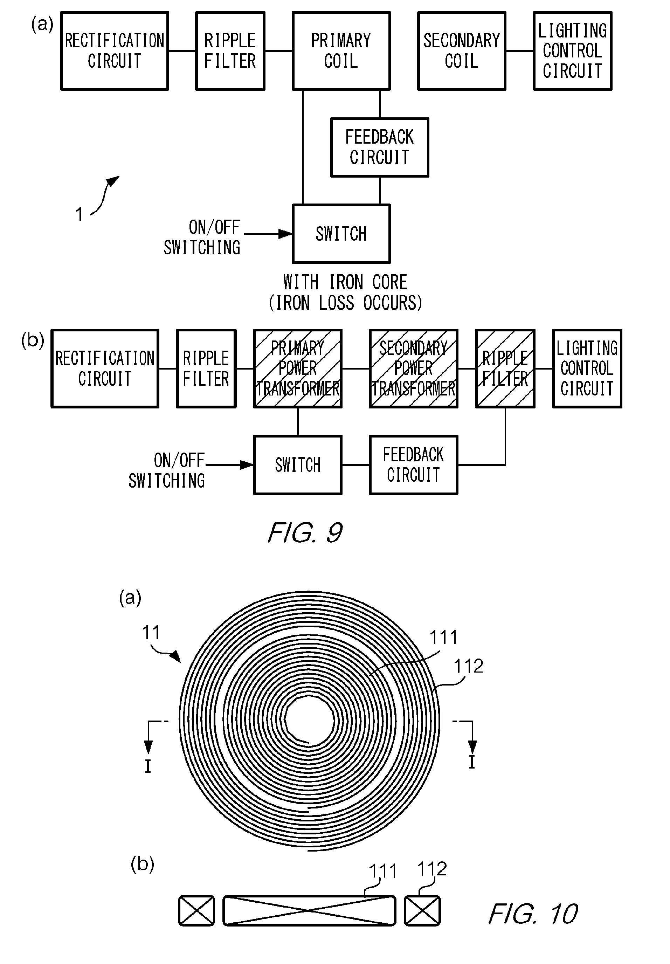

Fig. 9 shows a comparison between lighting device 1 of the present embodiment (shown in Fig. 9(a)) and a lighting device of prior art (shown in Fig. 9(b)).

As shown in Fig. 9(a), lighting device 1 according to the present embodiment includes a rectification circuit, ripple filter, primary coil, secondary coil, lighting circuit, feedback circuit, and switch. A conventional lighting device shown in Fig. 9(b) includes a rectification circuit, ripple filter, primary power transformer, secondary power transformer, ripple filter, lighting circuit, feedback circuit, and switch.

There is a difference between lighting devices of the present embodiment and conventional lighting devices in that a power transformer including an iron core is employed in conventional lighting devices whereas air-core coils are employed in the lighting devices according to the present embodiment. Since a core loss in a power transformer necessarily occurs in conventional lighting devices, heat is easily generated for the core loss, and an efficiency of power transfer (ratio of power supplied to a light source with regard to power input from an AC power source) is reduced. In lighting device 1 according to the present embodiment, since air-core coils are employed to supply power to a lighting circuit, there is no core loss occurring. Therefore, generated heat is reduced and an efficiency of transferring power is improved in lighting device 1.

In conventional lighting devices, a current is smoothed by a ripple filter to prevent occurrence of flicker, and an LED is driven by a direct voltage, whereas in lighting device 1, although the lighting unit is driven by an alternating current, the alternating voltage is applied with high switching frequency. Thus, there is unlikely to arise a flicker and irregularity of brightness among light sources. Further, in conventional fluorescent lamps an electrolytic capacitor is employed, whereas an element functioning as an electrolytic capacitor is not necessary for lighting device 1. Thus, in lighting device 1 no malfunction caused by a damaged electrolytic capacitor occurs.

In the embodiment described above, primary coil 11 and secondary coil 21 employed in lighting device 1 are air-core planar coils. It is also possible to apply coils described below to lighting device 1.

### Application 1

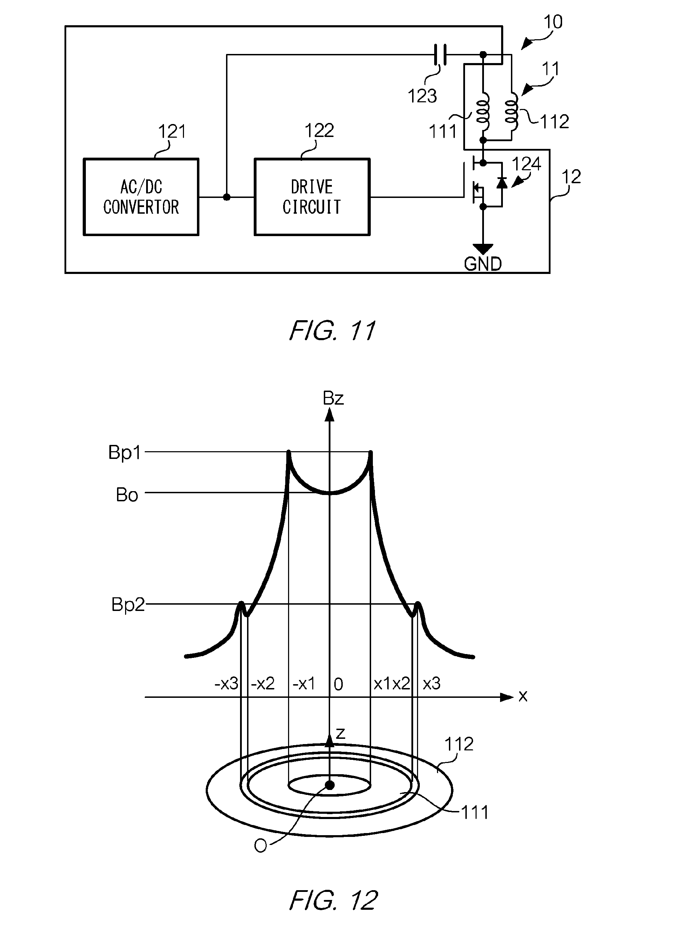

Fig. 10 shows a configuration of primary coil 11 according to Application 1. Fig. 10(a) is a plan view of primary coil 11 and Fig 10(b) is a cross section of primary coil 11 with regard to line I-I of Fig. 10(b). Fig. 11 shows a circuitry of power supplying unit 10 according to Application 1 in comparison to Fig. 5. As shown in Fig. 10, primary coil 11 is formed by arranging two planar coils 111 and 112 having different inner radiuses concentrically. Specifically, planar coil 111 is formed by winding a wire around a concentrical circle, and planar coil 112 is formed by winding a wire outside planar coil 111. Planar coils 111 and 112 of power supplying unit 10 are made of wires of the same material and arranged coplanarly. As shown in Fig. 10, a space is provided between an outer radius of planar coil 111 and an inner radius planar coil 112. Planar coils 111 and 112 are formed by a wire having the same material and length. Thus, direct current resistances of planar coils 111 and 112 are identical theoretically.

As shown in Fig. 11, planar coils 111 and 112 are parallely provided in power supplying unit 10. Thus, an alternating current with the same frequency and same phase passes through planar coils 111 and 112 in power supplying unit 10.

The inventor has found that generated heat is reduced in power supplying unit 10 by the circuitry of primary coil 11 described above. Details of the findings will now be described.

Fig. 12 shows a profile of a static magnetic field generated in a space opposing primary coil 11 (i.e., a space in which lighting unit 20 is arranged) when a direct current is fed to primary coil 11. As shown in Fig. 12, a distribution of magnetic flux density of a static magnetic field with regard to a radial direction of primary coil 11, which is shown in Fig. 12, is hereinafter referred to as "a magnetic field profile." The magnetic field profile represents a profile when there is no conducting material such as lighting unit 20 in the space. Since a magnetic permeability is constant within the space, the greater the magnetic flux density is, the greater an intensity of the magnetic field is. Hereinafter, explanations are made using a Cartesian coordinate in which a plane containing radial directions of primary coil 11 is defined as xy-plane and a direction perpendicular to the plane of primary coil 11 is defined as z-axis. The horizontal axis of the graph shown in Fig. 11 represents positions on the x-axis. An origin O corresponds to the center of primary coil 11 (i.e., the center of centrically circles formed by coils 111 and 112). Positions indicated by x= -x1 and x1 correspond to positions at the inner radius of planar coil 111, respectively. Positions indicated by x= -x2 and x2 correspond to positions at the outer radius of planar coil 111, respectively. Positions indicated by x= -x3 and x3 correspond to positions at the inner radius of planar coil 112, respectively. The vertical axis of the graph represents an intensity of the magnetic field with regard to z-direction, which is represented by magnetic flux density Bz in this case) at a position at a distance from primary coil 11 with regard to the z-axis.

As shown in Fig. 12, in the magnetic field profile of primary coil 11, the magnetic flux density Bz has its peak value Bp1 at positions on the inner radius of planar coil 111 corresponding to x = ± x1. Bp1 is larger than Bo which is a magnetic flux density at the center of primary coil 11. Bz increases in accordance with a distance from the center of primary coil 11 with regard to the x-axis. Bz gradually decreases in accordance with a distance from the positions on the inner radius of planar coil 111 (corresponding to x=±x1) with regard to the x - axis (i.e., the radial direction of primary coil 11). Bz again increases in accordance with a distance from the position (x=±x2) at the outer radius of planar coil 111. Bz is equal to Bp2, forming peaks at the positions (x=±x3) at the inner radius planar coil 112. Bz gradually decreases in accordance with a distance from the positions (x=±x3) at the inner radius of planar coil 112.

According to the magnetic field profile, the magnetic field generated by primary coil 11 is stronger (i.e., the magnetic flux density is larger) at inner positions with regard to the radial direction of primary coil 11, except for positions at inner radius of planar coil 111 and the boundaries of planar coil 111 and planar coil 112. It can be understood that in power supplying unit 10 of the present embodiment, an electromagnetic coupling between planar coil 111 and planar coil 112 results in an occurrence of stronger magnetic fields dispersed to a space above the inner radius of planar coil 111 and the space above the inner radius of planar coil 112. This means that a strong magnetic field occurring locally is prevented in power supplying unit 10 according to Application 1, as compared to the case where a single planar coil is employed. Prevention of a locally strong eddy current will lead to a reduced heat generated at a conducting material as compared to a case where a single planar coil is employed.

It is noted that if primary coil 11 included a single planar coil, Bz would not peak at positions (x=±x3) on inner radius of planar coil 112 and Bz would increase further near origin O, that is, a localized strong field would be generated.

To supply power to lighting unit 20 from power supplying unit 10 having primary coil 11 without generating excessive heat, it is necessary to feed the alternating current of the same frequency and the same phase in planar coils 111 and 112. When wire materials of planar coils 111 and 112 are the same, it is preferable that the lengths of wires forming planar coils 111 and 112 are close to each other (ideally, a difference in the length is zero). Hereinafter, the difference in the wire length is referred to as "a differential length." By doing so, a phase difference in an alternating current passing in planar coils 111 and 112 is reduced. If there is a phase difference in the alternating current passing through planar coils 111 and 112, harmonics are generated. In this regard, it is preferable to determine an allowable differential length for planar coils 111 and 112 such that harmonics (for example, higher than 1 MHz) are not generated when supplying power from power supplying unit 10 to lighting unit 20. In view of this, a difference in direct current resistance between planar coils 111 and 112 is preferably close to zero (ideally equal to zero).

To minimize the differential length of planar coils 111 and 112, the winding number may be adjusted. For example, if the winding number of the planar coil 111 is determined in advance, the winding number of the planar coil 112 is adjusted. In this case, the differential length is less than a perimeter of the outer radius of planar coil 112. If a winding number of the planar coil 112 is determined in advance, the winding number of the planar coil 112 are and the winding number of the planar coil 111 are adjusted. In this case the differential length is less than a perimeter of the outer radius planar coil 111.

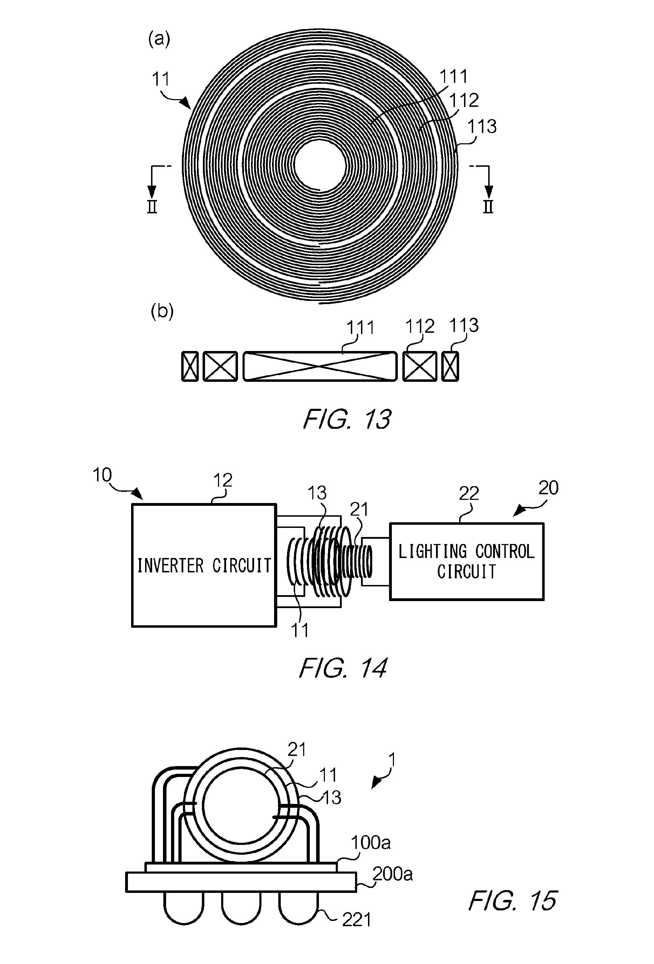

It is possible to employ more than three planar coils included in primary coil 11. In this case, a configuration of primary coil 11 is shown in Fig. 13. Fig. 13(a) is a plan view of primary coil 11 and Fig. 13(b) is a cross section of primary coil 11 with regard to a line indicated by II-II line shown therein. As shown in Fig. 13, primary coil 11 is formed by arranging three planar coils 111, 112, and 113 concentrically, each having different inner radius. Conditions for an arrangement of more than three planar coils can be determined in view of the case where two planar coils are employed. Specifically, two primary coils 11 having different inner radii are employed and arranged concentrically. Drive circuit 122 feeds an alternating current with the same frequency to each terminal of m planar coils which are provided parallely. Specifically, it is preferable that a generated static magnetic field satisfies a condition in which an intensity at a position at the inner radius of kth planar coil with regard to the radial direction is greater than intensities at both sides of the position when feeding direct current in k-1th and kth (2≦k≦m) planar coils that are arranged from inside to outside, respectively. Further, it is preferable that a difference in wire length of k-1th and kth planar coils is smaller than a perimeter of an outer radius of kth planar coil.

In the embodiment, planar coils 111 and 112 of primary coil 11 are arranged concentrically. However, it is not necessary that the centers of the coils are identical. It is expected that when more planar coils are included in primary coil 11, more broadly strong field areas appear, and thus a stronger effect of reducing generated heat due to an eddy current is achieved.

### Application 2

Instead of air-core planar coils, air-core solenoid coils may be employed in lighting device 1. An employment of a solenoid coil can reduce a space for installing an air-core coil as compared to a planar coil.

In this case, as shown in Fig. 14, the air-core solenoids are formed by winding a wire spirally in lighting device 1, such that primary coil 11, secondary coil 21, and feedback coil 13 have different inner radii.

In the example shown in Fig. 14, there is a relationship with regard to inner radii, that is, secondary coil 21 < primary coil 11< feedback coil 13. As shown in Fig. 14, when primary coil 11 and secondary coil 21 are arranged inside feedback coil 13, and secondary coil 21 is arranged inside primary coil 11 in lighting device 1, an electromagnetic induction is invoked by an alternating current fed to primary coil 11 so as to supply power to secondary coil 21 and perform a feedback control by feedback coil 13.

Fig. 15 shows a schematic configuration of circuit boards included in power supplying unit 10 and lighting unit 20 and electrical connections of lighting device 1 according to Application 2 in a view parallel to an axial direction of the solenoid coil. As shown in Fig. 15, a circuit board 100a on which inverter circuit 12 and the like is formed may be arranged over a circuit board 200a on which light emitting diode 221, lighting control circuit 22, and the like and primary coil 11, secondary coil 21, and feedback coil 13 may be formed on circuit board 100a. It is possible to employ other relationships of lengths of inner radii among secondary coil 21, primary coil 11, and feedback coil 13.

In view of the findings described above in relation to Application 1, it is expected that primary coil 11 is formed by multiple air-core solenoid coils to reduce heat generated in a conducting material when primary coil 11 is a solenoid.

### Second embodiment

It is possible to employ a dimmer function of adjusting an intensity of light emitted by light emitting diode 221 in lighting device 1 according to the first embodiment. Examples of the dimmer function will now be described assuming that primary coil 11 and secondary coil 21 are planar coils unless described otherwise.

### Example 1

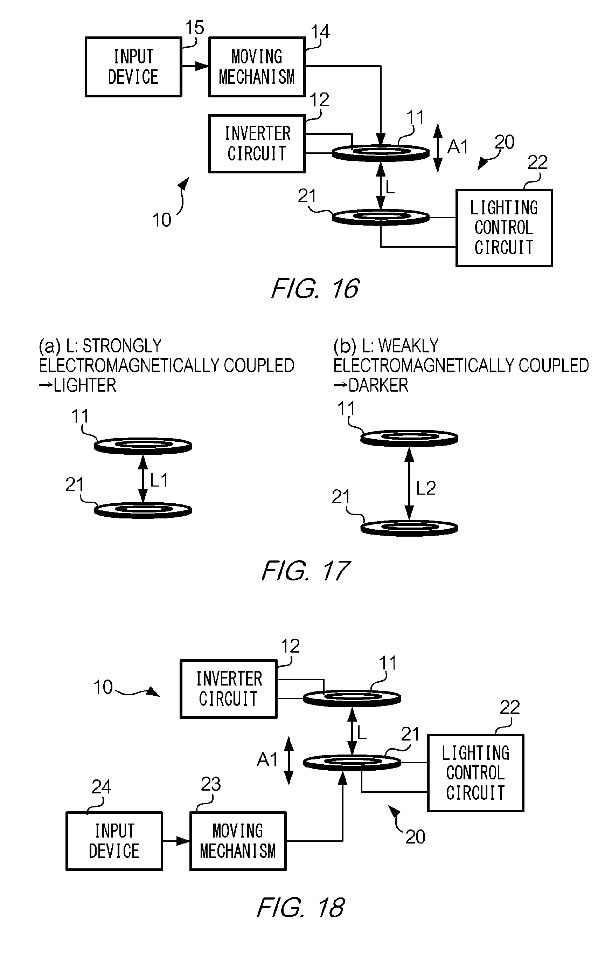

In Example 1, lighting device 1 changes a spatial relationship between primary coil 11 included in power supplying unit 10 and secondary coil 21 included in lighting unit 20, to implement the dimmer function in lighting device 1. Fig. 16 shows a configuration of lighting device 1 having a mechanism of moving primary coil 11. In Fig. 16, a mechanism of moving the primary coil 11 is added to the configuration of the electric connections of the inverter circuit and the lighting circuit. For simplicity, feedback coil 13 is omitted in the figure.

As shown in Fig. 16, power supplying unit 10 includes moving mechanism 14 and input device 15 in addition to the elements described in the first embodiment. Moving mechanism 14 is a moving mechanism, which is mechanically connected to primary coil 11, to move primary coil 11. For example, moving mechanism 14 is connected to a power source that includes supplying circuit board 100 on which primary coil 11 is formed. Moving mechanism 14 may be a mechanism having a slider or a mechanism having a ball screw and nut, so as to move primary coil 11, which is a planar coil, in a direction perpendicular to a plane of the coil, which is indicated by arrow A1 shown in Fig. 16. Since secondary coil 21 is fixed to lighting unit 20, a positional relationship between primary coil 11 and secondary coil 21 changes according to a movement of primary coil 11 caused by moving mechanism 14. In the example of Fig. 16, a distance between primary coil 11 and secondary coil 21 is equal to L.

Input device 15 is connected to moving mechanism 14. Input device 15 may include buttons or switches operable by a user. According to an input operation via input device 15 made by the user, primary coil 11 is caused to move in the direction indicated by A1 by moving mechanism 14. The user's input via input device 15 includes an instruction on a direction of movement as to whether primary coil 11 moves closer to or further away from secondary coil 21.

Fig. 17 shows a dimmer function implemented by moving mechanism 14. As shown in Fig. 17(a), it is assumed that the distance between primary coil 11 and secondary coil 21 becomes L1 (<L) after primary coil 11 is moved under control of moving mechanism 14. In this case, since an electromagnetic coupling between primary coil 11 and secondary coil 21 becomes stronger, power received by lighting unit 20 increases. When the power received by lighting unit 20 increases, lighting control circuit 22 causes light emitting diode 221 to have a brightness greater than that before the movement. It is assumed that the distance between primary coil 11 and secondary coil 21 becomes to L2(>L) after primary coil 11 is moved under control of moving mechanism 14, which is shown in Fig. 17(b). In this case, since an electromagnetic coupling between primary coil 11 and secondary coil 21 becomes weaker, power received by lighting unit 20 increases. When the power received by lighting unit 20 decreases, lighting control circuit 22 causes light emitting diode 221 to have a brightness lower than that before the movement.

It is possible to implement a mechanism of moving secondary coil 21 in lighting unit 20 so as to make a strength of the electromagnetic coupling between primary coil 11 and secondary coil 21 changeable. Fig. 18 shows a configuration of a lighting device that includes a mechanism of moving secondary coil 21. As shown in Fig. 18, lighting unit 20 further includes moving mechanism 23 and input device 24. Detailed configurations of moving mechanism 23 and input device 24 are similar to those of moving mechanism 14 and input device 15 described above. Moving mechanism 23 is configured to move secondary coil 21 in response to an input from input device 24, to change a positional relationship between primary coil 11 and secondary coil 21.

Additionally, each of primary coil 11 and secondary coil 21 may be moveable to change a positional relationship between primary coil 11 and secondary coil 21 in lighting device 1. As the distance between primary coil 11 and secondary coil 21 is changed, a preferred brightness can be realized. It has been confirmed by the inventors that changing the distance within a range of approximately 3mm is enough to obtain preferred brightness of light emitting diode 221. Therefore, there is no concern regarding increasing a size of lighting device 1 to prepare a space to allow primary coil 11 or secondary coil 21 to move.

Alternatively, moving mechanism 14 may be moveable on a plane on which primary coil 11 or secondary coil 21 is arranged (i.e., on a (upper/lower) surface of the planar coil, to change a positional relationship between primary coil 11 and secondary coil 21.

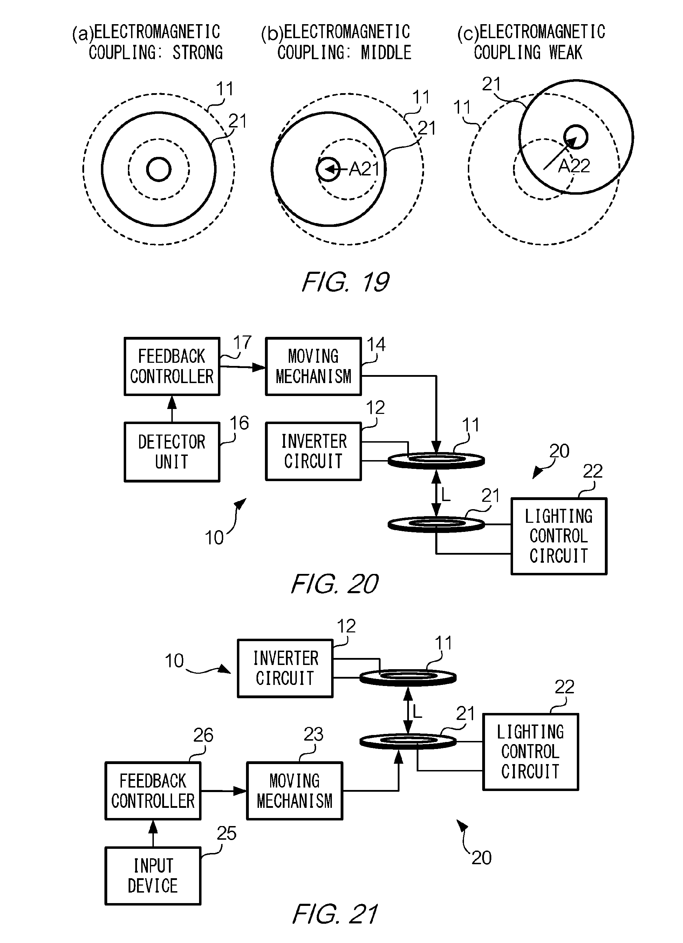

Fig. 19 shows a dimmer function implemented by moving mechanism 14. Figs. 19(a) to (c) show a primary coil 11 and secondary coil 21 as viewed from the upper side. As shown in Fig. 19(a), when centers of primary coil 11 and secondary coil 21 overlap with each other, an electromagnetic coupling between primary coil 11 and secondary coil 21 is strong. As shown in Fig. 19(b), when moving mechanism 14 moves secondary coil 21 toward a direction indicated by arrow A21 with regard to primary coil 11, the brightness of light emitting diode 221 becomes weaker than that before the movement. As shown in Fig. 19(c) when moving mechanism 14 moves secondary coil 21 toward a direction indicated by arrow A22 with regard to primary coil 11, in which the amount of displacement is larger than in the case of Fig. 19(b), the brightness of light emitting diode 221 becomes still weaker.

In view of the foregoing, lighting device 1 changes a positional relationship between primary coil 11 and secondary coil 21 to implement a dimmer function regardless of a direction of movement of primary coil 11 or secondary coil 21. Thus, an intensity of light emitted by light emitting diode 221 can be reduced in lighting device 1 when characteristics of primary coil 11 and/or secondary coil 21 have changed due to age.

### Example 2

In Example 2, a feedback control is applied to control moving mechanism 14 or 23 described in Example 1 in lighting device 1. Fig. 20 shows a configuration of lighting device 1 according to Example 2. In the feedback control, an intensity of light emitted by light emitting diode 221 is caused to become close (preferably, identical) to a target value. Fig. 20 shows a configuration of the feedback control applied to the inverter circuit and the lighting circuit whose electrical connections are described in Fig. 3. For the simplicity, feedback coil 13 is omitted in the figure.

Power supplying unit 10 includes detector unit 16 and feedback controller 17 in addition to moving mechanism 14. Detector unit 16 is a circuit configured to detect a physical quantity in accordance with a change of intensity of light emitted by light emitting diode 221. Specifically, detector unit 16 is an illuminance sensor arranged in a position at which an illuminance (intensity) of light emitted by light emitting diode 221 is detectable. Feedback controller 17 performs a feedback control on moving mechanism 14 based on an illuminance detected by detector unit 16. Specifically, feedback controller 17 causes moving mechanism 14 to change a positional relationship between primary coil 11 and secondary coil 21 based on the illuminance detected by detector unit 16 such that the illuminance detected by detector unit 16 becomes close to the target illuminance.

When the illuminance detected by detector unit 16 is smaller than the target illuminance, feedback controller 17 causes moving mechanism 14 to move primary coil 11 such that the detected illuminance becomes greater. When the illuminance detected by detector unit 16 is larger than the target illuminance, feedback controller 17 causes moving mechanism 14 to move primary coil 11 such that the detected illuminance becomes smaller. A relationship between the illuminance detected by detector unit 16 and a distance between primary coil 11 and secondary coil 21 (or the amount of movement of the coils) may be stored in a memory of feedback controller 17. Feedback controller 17 may control moving mechanism 14 by monitoring the illuminance detected by detector unit 16 such that detected illuminance becomes close to the target illuminance.

Target illuminance may be a predetermined and fixed value or can be changed by the user. Feedback controller 17 may set different values for the target illuminance depending on date and time (for example, present time). For example, feedback controller 17 sets values such that the target illuminance is lower in the daytime than in the night time. Alternatively, feedback controller 17 may set different values for the target illuminance depending on a season such that target illuminance is smaller in summer than in winter.

Instead of the illuminance of the emitted light, detector unit 16 may detect a physical quantity indicative of a change corresponding to an intensity of light emitted by light emitting diode 221. For example, detector unit 16 may perform a feedback control by detecting a brightness of light emitted by light emitting diode 221, an alternating current passing through primary coil 11 or an alternating voltage applied to primary coil 11, to cause the detected value to become close to a target value. Stated simply, the physical quantity detected by detector unit 16 is a physical quantity indicative of a cause of changing an intensity of light emitted by light emitting diode 221 or a physical quantity indicative of a change of an intensity of light emitted by light emitting diode 221.

Fig. 21 shows configuration of lighting device 1 configured to perform a feedback control by using moving mechanism 23. In this case, lighting unit 20 includes detector unit 25 and feedback controller 26 in addition to moving mechanism 23 as shown in Fig. 21. Detailed configuration of detector unit 25 and feedback controller 26 may be similar to those of detector unit 16 and feedback controller 17 described above. In this case, detector unit 25 may also detect a physical quantity other than an illuminance of emitted light as a physical quantity indicative of a change of an intensity of light emitted by light emitting diode 221. For example, detector unit 25 performs a feedback control by detecting alternating current passing through secondary coil 21 and/or light emitting diode 221 or an alternating voltage applied to secondary coil 21 and/or light emitting diode 221 such that the detected value becomes close to a target value.

Feedback controller 17 may move primary coil 11 and secondary coil 21 to change a positional relationship between primary coil 11 and secondary coil 21. By performing the feedback controls described above, a change of the intensity of light emitted by light emitting diode 221 can be reduced.

### Example 3

Lighting device 1 may perform a feedback control to change a switching frequency of N-type MOSFET 124 without feedback coil 13.

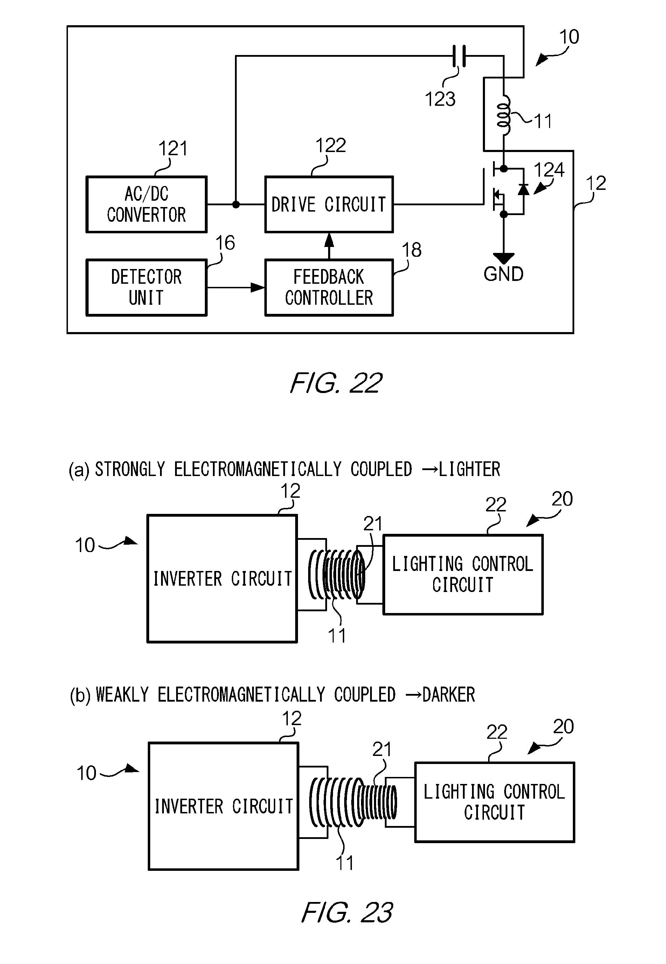

Fig. 22 shows a configuration of lighting device 1 according to Example 3. In Fig. 22, elements necessary for the feedback control are added to the configuration of Fig. 5 showing an electric connection of the inverter circuit and the lighting circuit.

Power supplying unit 10 includes detector unit 16 and feedback controller 18. Similarly to Example 2, detector unit 16 detects a physical quantity indicative of a change of an intensity of light emitted by light emitting diode 221.

Feedback controller 18 performs a feedback control on drive circuit 122 based on a physical quantity detected by detector unit 16. Specifically, feedback controller 18 performs on drive circuit 122 by changing a switching frequency of N-type MOSFET 124 based on a physical quantity detected by detector unit 16 such that the intensity of light emitted by light emitting diode 221 is close to a target value. Drive circuit 122 may include a function generator to control an on/off switching of N-type MOSFET 124 by generating a control signal for a switching frequency corresponding to the feedback control performed by feedback controller 18. The physical quantity detected by detector unit 16 may be the same as that of Example 2. Assuming that the physical quantity is an illuminance for the feedback control, when the illuminance detected by detector unit 16 is smaller than a target illuminance, feedback controller 18 increases the switching frequency of N-type MOSFET 124 such that the detected illuminance is greater than the target illuminance. On the other hand, when the illuminance detected by detector unit 16 is greater than a target illuminance, feedback controller 18 decreases the switching frequency of N-type MOSFET 124 such that the detected illuminance is smaller than the target illuminance. A relationship between the physical quantity detected by detector unit 16 and switching frequency may be stored in a memory of feedback controller 18. A target value for the intensity of light emitted by light emitting diode 221 may be a predetermined, fixed value or may be changed by the user, similarly to Example 2.

### Example 4

With regard to the feedback control to change a switching frequency of N-type MOSFET 124 using feedback coil 13 according to the first embodiment, lighting device 1 may be configured to change a target value of the intensity of emitted light. Specifically, lighting device 1 performs a feedback control using feedback coil 13 and a variable resistor is employed for resistor 1386 of balanced circuit 138 since the amount of current I2 changes in response to a change of a resistance of resistor 1386. When a resistance of resistor 1386 changes, current I1 passing in feedback coil 13 also changes. Thus, a target value of the feedback control depends on current I1 and I2.

A change of the resistance of resistor 1386 may be caused by a user's input be means of a predetermined input device (a dial, for example) or may be determined for a target illuminance depending on a date and time as described in Example 2.

### Example 5

It is possible to apply the configurations to implement a dimmer function, which are described in Examples 1 to 4, to a case where primary coil 11 and secondary coil 21 are air-core solenoid coils shown in Figs. 14 and 15.
Fig. 23 shows an example of a configuration of lighting device 1 to implement a dimmer function by means of a moving mechanism, in which air-core solenoid coils are employed. For simplicity, presentation of feedback coil 13 is omitted in the figures.

As shown in Fig. 23(a), when secondary coil 21 is located inside primary coil 11, a larger overlapping of primary coil 11 and secondary coil 21 with respect to the radial direction causes a stronger electromagnetic coupling and therefore a higher brightness of light emitting diode 221. On the other hand, as shown in Fig. 23(b), when primary coil 11 or secondary coil 21 is moved in the axial direction such that an overlapping area of primary coil 11 and secondary coil 21 with regard to the radial direction becomes smaller, the electromagnetic coupling between primary coil 11 and secondary coil 21 weakens and the brightness of light emitting diode 221 decreases.

Thus, the dimmer functions described in Examples 1 to 4 can be implemented in lighting device 1 regardless of a shape of primary coil 11 and secondary coil 21.

### Modifications

Modifications of the embodiments described above will now be described in the present invention.
(1) A lighting device according to the present invention can be made for either indoor use or outdoor use. An exterior of the lighting device is not necessarily the same as or similar to that of fluorescent lamps. A lighting device according to the present invention may be a ceiling light, circular fluorescent lamp, compact fluorescent lamp, fluorescent lamp bulb or any other type of lighting device similar thereto. A lighting circuit according to the present invention may be configured to cause a light source other than a light emitting diode to emit light using power received by a secondary coil.
(2) In lighting device 1 of the embodiment described above, power supplying unit 10 exemplarily includes an AC/DC convertor 121, a convertor equivalent to AC/DC convertor 121 is provided as an external device of power supplying unit 10. Lighting device 1 does not necessarily include ballast 30.
(3) Although a feedback circuit including feedback coil 13 and balanced circuit 138 is exemplarily employed in lighting device 1 according to the embodiments described above to perform a feedback control, the feedback circuit can be omitted when there is no need to perform the feedback control.
(4) Planar coils are circular in lighting device 1 according to the embodiments described above; however, any shape of coils including oval, hexagonal, or other polygonal shape can be employed as long as it is planar.
(5) Although configurations of AC/DC convertor 121, drive circuit 122, feedback circuit according to the embodiments are exemplarily disclosed, it is possible to modify a circuitry of a rectification circuit, omit a resonance capacitor, or employ several types of ICs having different terminals. Instead of an N-type MOSFET, a P-type MOSFET or other swathing devices can be employed to perform an on/off switching controlled by drive circuit 122.
(6) Primary coil 11 and secondary coil 21 are exemplary air-core coils in lighting device 1 according to the embodiments described above. It is noted that if a material having a low magnetic permeability is provided in a core of primary coil 11 and/or secondary coil 21, the generated heat in lighting device 1 is not expected to be extraordinary. In view of this, a material having a magnetic permeability larger than the air can be provided in a core of primary coil 11 and/or secondary coil 21. As for a solenoid coil, any materials can be arranged in a core of a coil except for a magnetic (for example, ferromagnetic) material including an iron core, which has a large magnetic permeability.
(7) As described in the embodiments, in a case where power supplying unit 10 and lighting unit 20 are implemented by independent devices, a power transfer device (for example, adaptor) having a function equivalent to that of power supplying unit 10 and a luminaire having a function equivalent to that of lighting unit 20 can be provided as separate and independent products or parts.

## Claims

1. A lighting device comprising:
a power supplying unit that supplies power contactlessly; and
a lighting unit operable by power supplied by the power supplying unit, wherein
the power supplying unit comprises:
a primary coil having a terminal electrically connected to an output terminal of an output convertor that rectifies an alternating voltage supplied by an AC power source;
a switch having a terminal electrically connected to another terminal of the primary coil and another terminal electrically connected to a reference potential; and
a drive circuit that feeds to the primary coil an alternating current with a switching frequency based on an output voltage of the convertor by performing an on/off switching on the switch with a switching frequency higher than a frequency of an AC power source, wherein
the lighting unit comprises:
a secondary coil; and
a lighting circuit that causes a light source to emit light using a power generated by an electromagnetic induction according to the alternating current passing through the primary coil upon receipt of the power by the secondary coil.

2. The lighting device according to Claim 1, further comprising a moving mechanism configured to move the primary coil or the secondary coil to change a positional relationship between the primary coil and the secondary coil.

3. The lighting device according to Claim 2, further comprising:
a detector unit that detects a physical quantity representative of a change of an intensity of light emitted by the light source; and
a feedback controller that performs a feedback control to cause the intensity of the emitted light to become close to a target value by controlling the moving mechanism to change the positional relationship based on the physical quantity detected by the detector unit.

4. The lighting device according to Claim 1or 2, further comprising:
a detector unit that detects a physical quantity indicative of a change of an intensity of light emitted by the light source; and
a feedback controller that performs a feedback control to cause the intensity of the emitted light to become close to a target value by changing the switching frequency based on the physical quantity detected by the detector unit.

5. The lighting device according to any one of Claims 1 to 4, wherein:
the power supplying unit comprises:
a feedback coil; and
a detector circuit that detects a change of a current passing through the primary coil based on a current fed by the feedback coil due to an electromagnetic induction corresponding to the alternating current, and
the drive circuit performs an on/off switching based on the change detected by the detector circuit.

6. The lighting device according to any one of Claims 1 to 5, wherein the primary coil and the secondary coil are air-core coils.

7. A power transfer device that contactlessly supplies power to a luminaire which includes: a secondary coil and a lighting circuit that cause a light source to emit light using power received by the secondary coil, the device comprising:
a primary coil having a terminal electrically connected to an output terminal of an output convertor that rectifies an alternating voltage supplied by an AC power source;
a switch having a terminal electrically connected to another terminal of the primary coil and another terminal electrically connected to a reference potential; and
a drive circuit that feeds an alternating current with a switching frequency based on an output voltage of the convertor in the primary coil by performing an on/off switching of the switch with a switching frequency higher than a frequency of the AC power source.

8. A luminaire operable using power received by a power transfer device which includes: a primary coil having a terminal electrically connected to an output terminal of an output convertor that rectifies an alternating voltage supplied by an AC power source; a switch having a terminal electrically connected to another terminal of the primary coil and another terminal electrically connected to a reference potential; and a drive circuit that feeds an alternating current to the primary coil with a switching frequency based on an output voltage of the convertor by performing an on/off switching of the switch with a switching frequency higher than a frequency of an AC power source, the luminaire comprising:
a secondary coil; and
a lighting circuit that causes a light source to emit light using a power generated by an electromagnetic induction according to the alternating current passing through the primary coil upon receipt of the power by the secondary coil.
